(19) **Europäisches Patentamt**
**European Patent Office**
**Office européen des brevets**

(11) **EP 2 112 053 B1**

(12) **EUROPEAN PATENT SPECIFICATION**

(45) Date of publication and mention
of the grant of the patent:
**12.08.2015   Bulletin 2015/33**

(51) Int Cl.:
***B62D 6/00*** *(2006.01)*          ***B62D 5/04*** *(2006.01)*

(21) Application number: **08155182.2**

(22) Date of filing: **25.04.2008**

(54) **Yaw stability control system**

Gierstabilitäts-Regelsystem

Système de contrôle de la stabilité de lacet

(84) Designated Contracting States:
**DE GB SE**

(43) Date of publication of application:
**28.10.2009   Bulletin 2009/44**

(73) Proprietor: **Volvo Car Corporation**
**405 31 Göteborg (SE)**

(72) Inventors:
• **Jacobson, Bengt**
**435 38 Mölnlycke (SE)**

• **Hultén, Johan**
**413 16 Göteborg (SE)**
• **Lazic, Nenad**
**418 40 Göteborg (SE)**

(74) Representative: **Johannesson, Eva**
**Valea AB**
**Teknikringen 10**
**583 30 Linköping (SE)**

(56) References cited:
**WO-A-2006/087141          WO-A-2007/125083**
**DE-A1-102005 012 548**

**Description**

TECHNICAL FIELD

The present invention is related to a yaw stability control system for a vehicle equipped with electric power assisted steering in accordance with the preamble of claim 1. Furthermore, the present invention relates to a method of controlling a yaw stability control system for a vehicle equipped with electric power assisted steering in accordance with the preamble of claim 16.

BACKGROUND OF THE INVENTION

Several vehicle control systems, which are used to augment the driving capability of a vehicle operator, currently exist. Those control systems include anti-brake-lock system (ABS), traction control system (TCS), and stability controls. Example stability control systems are electronic stability control (ESC) systems or sometimes referred to as yaw stability control (YSC) systems. Systems of this kind are also sometimes called ESP (Electronic Stability Program) systems or DSTC (Dynamic Stability Traction Control) systems.

The stability control systems are utilized to maintain controlled and stable vehicle operations for improved vehicle and occupant safety. The stability control systems are often used to maintain control of a vehicle following a desired travel direction, to prevent the vehicle from spinning out and help the driver maintain directional stability when cornering. This function is enabled through the ABS system to brake one or more of the wheels if a lateral slide or skidding is detected.

More specifically, the above yaw stability control systems typically compare the desired direction of a vehicle based upon the steering wheel angle and the path of travel, which is determined from motion sensors located on the vehicle. By regulating the amount of braking at each corner of the vehicle and the traction force of the vehicle, the desired path of travel may be maintained.

Existing stability control systems are designed to correct undesired vehicle motion caused by a tire force disturbance, such as a tire force difference due to a road surface disturbance or due to a mismatch between the driving intention of a driver and a road surface condition. This mismatch usually happens when there is a significant difference between the front and the rear tire lateral forces applied to the vehicle (referred to as the lateral tire force difference), or there is a significant difference between the right and the left tire longitudinal tire forces (referred to as the longitudinal tire force difference), or a combination thereof. Such a tire force difference is called a tire force disturbance.

The existing yaw stability control systems are effective in controlling the undesired vehicle motions due to the aforementioned tire force disturbance. The yaw stability control systems activate brakes, reduce engine torque, or vary the driving torque at individual wheels or axles so as to generate an active tire force difference to counteract the effect of the tire force disturbance. That is, the control mechanism and the vehicle disturbance are from the same source: the tire force variations or the tire force differences.

For example, when a vehicle is driven at a high speed to negotiate a turn, the vehicle could saturate its front tire cornering forces such that there is a front-to-rear tire lateral force difference. Such a tire force disturbance will generate a yaw moment disturbance, which causes the vehicle to steer less than that requested by the driver. This is referred to as an understeer situation. When the existing yaw stability control systems are used, the rear inside wheel is braked to add a longitudinal force to generate a yaw moment to counteract the yaw moment disturbance generated by the tire force disturbance due to the front-to-rear tire lateral force difference.

However, this brake intervention is usually performed as a function of yaw rate error, where the yaw rate error is determined as the difference between a yaw rate target and a sensed yaw rate. The yaw rate target is normally calculated from a steering wheel angle, which may be considered indicative of the driver intent, and the vehicle velocity using a nonlinear, so called, bicycle model. This bicycle model is nonlinear in terms of a tire to road friction compensation.

Experienced drivers are sensitive to the torque feedback in the steering wheel. The steering wheel torque will decrease, even for higher steering wheel angles, before the position where the peak friction is passed. Using this information, provided through the steering wheel, the experienced driver may perform compensatory steering in order to utilize the tire to road friction in an optimal way on the front axle.

However, such driving by an experienced driver will result in small yaw rate errors in the yaw stability control system, usually below a threshold of the yaw stability control system, wherefore no yaw stability control intervention will be performed by the yaw stability control system. As a consequence thereof the rear axle tire to road friction of the vehicle will not be used in an optimal way.

Document WO 2007/125083A discloses the preamble of claims 1 and 16, a method for determining an optimal steering angle in understeer situations of a vehicle. To assist a driver in reliably stabilizing the vehicle during an understeer situation while driving, a model-based driving traction coefficient factor, a model-based kinematic factor, and a float angle are taken into account in the determination of the steering angle, wherein a limited steering angle at which a maximum lateral force is set, is determined by addition of the driving traction coefficient factor, the kinematic factor, and the float angle. The document further discloses that understeering may be detected as a function of a threshold value.

SUMMARY OF THE INVENTION

An object of the present invention is to provide an improved yaw stability control system for a vehicle equipped with electric power assisted steering through which the tire to road friction of the vehicle at both axles may be used more effectively.

According to a first aspect of the present invention this object is achieved in accordance with claim 1, which specifies that the yaw stability control system for a vehicle equipped with electric power assisted steering comprises: means for determining the occurrence of understeer; means for determining the degree of understeer after the occurrence of understeer is determined; means for determining if the determined degree of understeer exceeds a threshold value; means for saving the steering wheel torque value and steering wheel angle value when determined that the determined degree of understeer exceeds the threshold value; means for calculating a delta steering wheel torque, delta steering wheel angle and updating the steering wheel angle at the start of delta torque calculation; means for applying the calculated delta steering wheel torque to the steering of the vehicle; means for calculating a driver intended steering wheel angle and using it for controlling yaw stability control operations of the vehicle.

A further object of the present invention is to provide an improved method of controlling a yaw stability control system for a vehicle equipped with electric power assisted steering, through which method the tire to road friction of the vehicle at both axles may be used more effectively.

According to a second aspect of the present invention this object is achieved in accordance with claim 16, which specifies that the method of controlling a yaw stability control system for a vehicle equipped with electric power assisted steering comprises the steps of: determining the occurrence of understeer; determining the degree of understeer after the occurrence of understeer is determined; determining if the determined degree of understeer exceeds a threshold value; saving the steering wheel torque value and steering wheel angle value when determined that the determined degree of understeer exceeds the threshold value; calculating a delta steering wheel torque and delta steering wheel angle and updating the steering wheel angle at the start of delta torque calculation; applying the calculated delta steering wheel torque to the steering of the vehicle; calculating a driver intended steering wheel angle and using it for controlling yaw stability control operations.

Further embodiments are listed in the dependent claims.

It will be appreciated that features of the invention are susceptible to being combined in any combination without departing from the scope of the invention as defined by the accompany claims.

BRIEF DESCRIPTION OF THE DRAWINGS

By way of example only, embodiments of the present invention will now be described with reference to the accompanying drawings wherein:

Figure 1 is a schematic figure showing steering wheel torque as function of steering wheel angle illustrating graphically the calculations in accordance with the present invention.

Figure 2 is a discrete state diagram illustrating the different states of a system in accordance with the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

DETAILED DESCRIPTION OF PREFERRED EMBODIMENTS

This invention is based on the fact that a vehicle driver is very sensitive to the steering wheel torque through haptic perception in such a way that the driver knows which torque that corresponds to a certain combination of curvature and speed. Therefore, the steering wheel torque is a way of indicating the steering wish i.e. intent of the driver. Evidence in support of this view is the fact that it is almost impossible to drive a vehicle without any torque feedback in the steering wheel. There is a general perception that torque feedback in the steering wheel improves the handling of a vehicle, and therefore is quite important.

The steering wheel torque feedback effects that are most common are, an increase in driver torque as the lateral acceleration on the vehicle increases, which leads to the steering wheel seeming to become heavier, and a sudden drop 8 in steering wheel torque, such that the steering wheel seems to become much lighter, when the vehicle reaches understeer. This steering wheel torque drop is often referred to as the pneumatic trail effect.

Existing yaw stability control systems are used for controlling undesired vehicle motions due to e.g. understeer. In order to affect this control the rear inside wheel of the vehicle is braked to add a longitudinal force and reduce the lateral force of the braked wheel to generate a yaw moment to counteract the yaw moment disturbance generated by the tire force disturbance due to the front-to-rear tire lateral force difference. This brake intervention is in prior art yaw stability control systems usually performed as a function of yaw rate error.

However, as the experienced driver may perform compensatory steering based on the steering wheel torque feedback provided through the steering wheel, such compensatory steering may result in small yaw rate errors in the yaw stability control system, usually below a threshold of the yaw stability control system, wherefore no yaw stability control intervention will be performed by the prior art yaw stability control system. As a consequence thereof the rear axle tire to road friction of the vehicle will not be used in an optimal way.

Electric power assisted steering systems are well known in the art. Electric power assisted steering systems that use, for example, a rack and pinion gear set to couple the steering column to the steered axle, provide power assist by using an electric motor to either apply rotary force to a steering shaft connected to a pinion gear, or apply linear force to a steering member having the rack teeth thereon. The electric motor in such systems is typically controlled in response to a driver's applied torque to the vehicle steering wheel, and sensed vehicle speed.

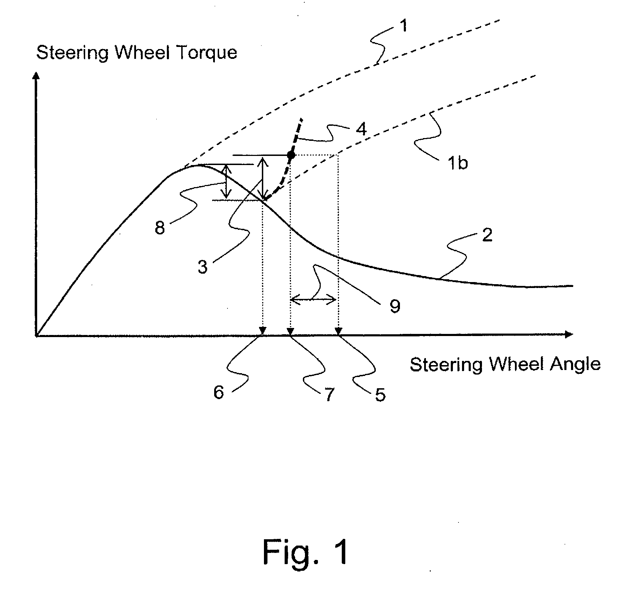

Figure 1 is a schematic figure showing steering wheel torque (SWT) as function of steering wheel angle (SWA) for a certain speed. The topmost dashed line 1 indicates steering wheel torque when the front wheels stay within the maximum lateral side force area, i.e. steering wheel torque in bicycle model with no understeer. The solid line 2 shows steering wheel torque when the front wheels saturate at maximum lateral side force, i.e. steering wheel torque in a real vehicle at understeer.

In accordance with the present invention - in the case of understeer (solid line 2) - it is suggested to, using the electric power assisted steering system, apply a delta torque ($\Delta Tq$) 3 on the steering wheel and hence increase the steering wheel torque to guide the driver not to overturn the steering wheel in combination with providing a steering wheel angle 5 that indicates the driver intent to the yaw stability control system. Thus in accordance with the present invention it is ensured that full utilization of the tire to road friction at the front axle is achieved while at the same time the yaw stability control system is able to provide high intervention on the rear axle, e.g. through activating brakes, reducing engine torque, or varying the driving torque at individual wheels or axles.

The thick dashed black line 4 of figure 1 shows the effect of the delta torque ($\Delta T_q$) 3 applied on the steering wheel. The lower dashed line 1b indicates the steering wheel torque when the front wheels stay within the maximum lateral side force area from the point of where delta torque ($\Delta Tq$) 3 starts.

The driver intended steering wheel angle 5 is calculated as the angle that corresponds to the current steering wheel torque for high tire to road friction as found on the dashed line 1 b (as indicated in Figure 1). It is the driver intended steering wheel angle 5 that will be sent to the yaw stability control system and on to e.g. the brake control system, not the actual steering wheel angle 7. The yaw stability control system will then give rear axle brake intervention at the same time as the front axle tire to road friction is fully utilized. Therefore, the stabilization at understeer situation will be increased.

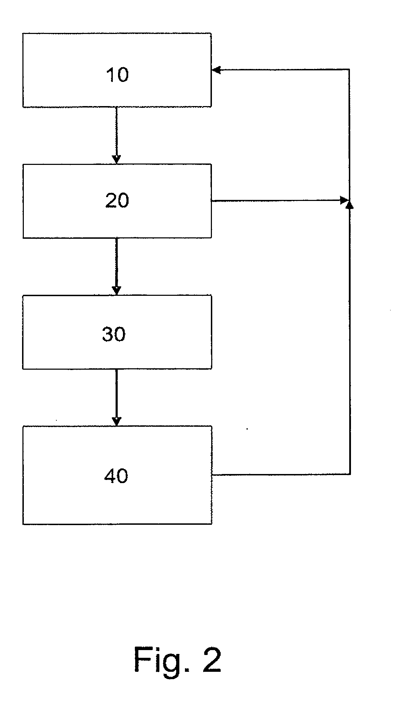

Figure 2 is a discrete state diagram illustrating the different states of a system in accordance with the present invention.

In the first state 10, in order to detect understeer, a bicycle model, given some vehicle specific physical parameters, is used to estimate yaw rate and lateral acceleration from vehicle speed and steering wheel angle. While the bicycle model gives information how a vehicle behaves in a stable condition, sensor values of yaw rate and lateral acceleration tell how the vehicle actually behaves, no matter if it is stable or understeering. By comparing bicycle model values and sensor values it is possible to tell if the vehicle is at understeer or not.

The below definitions will be used in the following description:

Delta torque ($\Delta Tq$) (designated 3 in figure 1) is the guidance torque to be applied on the steering wheel.

Delta angle ($\Delta An$) (designated 9 in figure 1) is the angle that is added to the actual SWA, to indicate driver intention (SWA_intention = SWA_actual + delta angle)

$\dot{\psi}_{mdl}$ is the yaw rate from the bicycle model.

$\dot{\psi}_{meas}$ is the measured yaw rate from vehicle sensors.

The following conceptual algorithm is used in the first state 10 to detect understeer: If $|\dot{\psi}_{mdl} - \dot{\psi}_{meas}| > \delta_{thres\_understeer}$

Then

*Understeer detected*

Else

*Understeer not detected*

Where $\delta_{thres\_understeer}$ is a vehicle speed dependent threshold, i.e. $\delta_{thres\_understeer} = f(v)$. It should be noted that the above algorithm is conceptual and intended mainly to provide an understanding of the variables used to determine the amount of understeer, and that the detection of understeer may be performed in other ways known to the person skilled in the art and incorporated into the present invention.

If the driver continues to steer in a conventional vehicle that reaches understeer, the steering wheel torque will drop, referred to as the pneumatic trail effect. In accordance with the present invention, once understeer is detected, a small torque drop is allowed before an understeer delta torque 3 is applied. This is to allow experienced drivers to prevent too large understeer without being affected by a delta torque 3 from the understeer algorithm.

Once the occurrence of understeer is detected in state 10 the degree of understeer is determined. In a first embodiment the torque drop, $Tq_{drop}$, is determined in the second state 20 by the difference between the steering wheel torque when the occurrence of understeer was detected and the current steering wheel torque. If the torque drop, $Tq_{drop}$, exceeds a threshold the calculation proceeds to state 30, otherwise it transits back to state 10.

In a second alternative embodiment the yaw rate error is determined in the second state 20 by the difference between the yaw rate from the bicycle model and the measured yaw rate from vehicle sensors. If the yaw rate error exceeds a threshold the calculation proceeds to state 30, otherwise it transits back to state 10.

In a third alternative embodiment the change in steering rack force is determined in the second state 20 by the difference between an ideal steering rack force from the bicycle model and a measured steering rack force from vehicle sensors. If this difference in steering rack force exceeds a threshold the calculation proceeds to state 30, otherwise it transits back to state 10. As an alternative, the pinion torque may also be used in this third alternative embodiment.

In order to calculate the steering wheel delta torque 3, $SWA_{dTq\_start}$, i.e. the value of the steering wheel angle 6 at the start of delta torque calculation, is needed. Thus, the steering wheel torque value and steering wheel angle value at this time are saved in the third state 30, whereupon it transits to a fourth state 40.

In the fourth state 40, the delta steering wheel torque 3 and delta steering wheel angle is calculated.

The delta steering wheel torque 3 is a linear function of change in steering wheel angle since the start 6 of delta torque calculation. The steering wheel angle 6 at the start of each delta torque calculation shall in case of the second or third alternative embodiments continuously be updated by the use of the yaw rate error or change in steering rack force. The delta steering wheel torque is calculated as the steering wheel angle difference from the start angle times a tunable gain k. The delta torque is smoothly limited to a max value by use of a suitable constant T.

$$\Delta Tq = sat((SWA_{actual} - SWA_{dTq\_start}) * k, -T, T)$$

The delta steering wheel angle 9 tells how large additional angle would be needed to obtain the driver intended steering wheel angle 5 assuming high tire to road friction and no delta torque compensation.

The delta steering wheel angle 9 is calculated from a linear bicycle model using the delta torque ($\Delta Tq$), torque derivative with respect to lateral acceleration ($dTq/da_y$), vehicle speed ($v$), and quasi-static ratio between yaw rate and steering wheel angle

$$\dot{\psi} * v = a_y$$
$$\Rightarrow \Delta\dot{\psi} * v = \Delta a_y$$
$$\Rightarrow (\Delta An * k_{\frac{d\dot{\psi}}{dSWA}}) * v = \frac{\Delta Tq}{dTq/da_y}$$

As long as the occurrence of understeer is detected the understeer delta torque 3 is applied to guide the driver not to turn the steering wheel even further at understeer and the driver intended steering wheel angle 5 is sent to the yaw stability control system and e.g. on to the brake control system, which will then give rear axle brake intervention at the same time as the front axle tire to road friction is fully utilized. If the occurrence of understeer is not detected state 40 transits to state 10. Thus, in accordance with the present invention, the stabilization at understeer situations will be increased.

In accordance with the present invention is also envisaged an automotive vehicle, which comprises a yaw stability control system as described above.

Furthermore, in accordance with the present invention is also envisaged a method of controlling a yaw stability control system for a vehicle equipped with electric power assisted steering. In accordance with the present invention the method comprises the steps of: determining the occurrence of understeer; determining the degree of understeer after the occurrence of understeer is determined; determining if the determined degree of understeer exceeds a threshold value; saving the steering wheel torque value and steering wheel angle value when determined that the determined degree of understeer exceeds the threshold value; calculating a delta steering wheel torque and delta steering wheel angle and updating the steering wheel angle at the start of delta torque calculation; applying the calculated delta steering wheel torque to the steering of the vehicle; calculating a driver intended steering wheel angle and using it for controlling yaw stability control operations.

The principles of the present invention may be used to trigger understeer braking interventions at one or more of the wheels of the vehicle, both in order to generate a course correcting yaw moment as well as for retarding the vehicle. Furthermore, the principles of the present invention may also be used to trigger further yaw stability control operations such as reducing engine torque or varying the driving torque at individual wheels or axles.

Thus, as illustrated above in accordance with the present invention is enabled the provision of improved yaw stability control systems for a vehicle which allows the experienced driver to perform compensatory steering based on the steering wheel torque feedback provided through the steering wheel, whilst at the same time ensuring stabilizing yaw stability control intervention, e.g. braking intervention, such that the tire to road friction of the vehicle at both axles may be used more effectively.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only by the the claims appended hereto.

## Claims

1. A yaw stability control system for a vehicle equipped with electric power assisted steering comprising: means (10) for determining the occurrence of understeer; means (20) for determining the degree of understeer after the occurrence of understeer is determined; means for determining if the determined degree of understeer exceeds a threshold value; **characterised in that** it comprises means (30) for saving the steering wheel torque value and steering wheel angle value when determined that the determined degree of understeer exceeds the threshold value; means (40) for calculating a delta steering wheel torque (3), delta steering wheel angle (9) and updating the steering wheel angle (6) at the start of delta torque calculation; means (40) for applying the calculated delta steering wheel torque (3) to the steering of the vehicle; means (40) for calculating a driver intended steering wheel angle (5) as the angle that corresponds to the current steering wheel torque for high tire to road friction and using it for controlling yaw stability control operations of the vehicle.

2. A yaw stability control system according to claim 1, **characterised in that** it further comprises as the means for determining the degree of understeer means for calculating the drop in steering wheel torque (8) after understeer is determined.

3. A yaw stability control system according to claim 2, **characterised in that** the means for determining if the determined degree of understeer exceeds a threshold value comprises means for determining if the calculated drop in steering wheel torque (8) exceeds a threshold value

4. A yaw stability control system according to any one of claims 2 to 3, **characterised in that** the means for calculating the drop in steering wheel torque (8) is arranged to calculate the drop in steering wheel torque (8) from the difference between the steering wheel torque when understeer was detected and the current steering wheel torque.

5. A yaw stability control system according to claim 1, **characterised in that** it further comprises as the means for determining the degree of understeer means for calculating the yaw rate error after understeer is determined.

6. A yaw stability control system according to claim 5, **characterised in that** the means for determining if the determined degree of understeer exceeds a threshold value comprises means for determining if the yaw rate error exceeds a threshold value.

7. A yaw stability control system according to claim 1, **characterised in that** it further comprises as the means for determining the degree of understeer means for calculating the change in steering rack force after understeer is determined.

8. A yaw stability control system according to claim 7, **characterised in that** the means for determining if the determined degree of understeer exceeds a threshold value comprises means for determining if the change in steering rack force exceeds a threshold value.

9. A yaw stability control system according to any one of claims 1 to 8 **characterised in that** the delta steering wheel torque (3) is a linear function of change in steering wheel angle since the start (6) of the delta steering wheel torque calculation.

10. A yaw stability control system according to any one of claims 1 to 9, **characterised in that** the delta steering wheel torque (3) is calculated as $\Delta Tq = sat((SWA_{actual} - SWA_{dTq\_start})*k,-T,T)$, where T smoothly limits the delta steering wheel torque to a max value.

11. A yaw stability control system according to any one of claims 1 to 10, **characterised in that** the delta steering wheel angle (9) is calculated under the assumption of high tire to road friction (1b) and no delta steering wheel torque compensation.

12. A yaw stability control system according to claim 11, **characterised in that** the delta steering wheel angle (9) is angle is calculated from a linear bicycle model using the delta torque ($\Delta Tq$), torque derivative with respect to lateral acceleration ($dTq / da_y$), vehicle speed ($v$), and quasi-static ratio between yaw rate and steering wheel angle

$$\left( k_{\frac{d\dot{\psi}}{dSWA}} \right).$$

13. A yaw stability control system according to claim 12, **characterised in that** the delta steering wheel angle (9) is calculated from:

$$\dot{\psi} * v = a_y$$
$$\Rightarrow \Delta \dot{\psi} * v = \Delta a_y$$
$$\Rightarrow (\Delta An * k_{\frac{d\dot{\psi}}{dSWA}}) * v = \frac{\Delta Tq}{dTq / da_y}$$

14. A yaw stability control system according to any one of the preceding claims, **characterised in that** an electric power assisted steering system is used as the means for applying the calculated delta steering wheel torque (3) to the steering of the vehicle.

15. An automotive vehicle **characterised in that** it comprises a yaw stability control system according to any one of the preceding claims.

16. A method of controlling a yaw stability control system for a vehicle equipped with electric power assisted steering comprising the steps of:

> determining the occurrence of understeer;
> determining the degree of understeer after the occurrence of understeer is determined;
> determining if the determined degree of understeer exceeds a threshold value; **characterised in that** it comprises the steps of:
>
>> saving the steering wheel torque value and steering wheel angle value when determined that the determined degree of understeer exceeds the threshold value;
>> calculating a delta steering wheel torque and delta steering wheel angle and updating the steering wheel angle at the start of delta torque calculation;
>> applying the calculated delta steering wheel torque to the steering of the vehicle;
>> calculating a driver intended steering wheel angle as the angle that corresponds to the current steering wheel torque for high tire to road friction and using it for controlling yaw stability control operations.

**Patentansprüche**

1. Gierstabilitätssteuersystem für ein Fahrzeug, das mit einer elektrischen Servolenkung ausgestattet ist, wobei das Gierstabilitätssteuersystem umfasst: ein Mittel (10) zum Bestimmen des Auftretens eines Untersteuerns; ein Mittel (20) zum Bestimmen des Grads des Untersteuerns, nachdem das Auftreten eines Untersteuerns bestimmt worden ist; ein Mittel zum Bestimmen, ob der bestimmte Grad des Untersteuerns einen Schwellenwert übersteigt; **dadurch gekennzeichnet, dass** das Gierstabilitätssteuersystem umfasst: ein Mittel (30) zum Sichern des Lenkraddrehmomentwerts und des Lenkradwinkelwerts, wenn bestimmt wird, dass der bestimmte Grad des Untersteuerns den Schwellenwert übersteigt; ein Mittel (40) zum Berechnen einer Lenkraddrehmomentdifferenz (3), einer Lenkradwinkeldifferenz (9) und zum Aktualisieren des Lenkradwinkels (6) zu Beginn des Berechnens der Drehmomentdifferenz; ein Mittel (40) zum Anwenden der berechneten Lenkraddrehmomentdifferenz (3) auf die Lenkung des Fahrzeugs; ein Mittel (40) zum Berechnen eines vom Fahrer beabsichtigten Lenkradwinkels (5) als den Winkel, der dem aktuellen Lenkraddrehmoment für hohe Reifen-Straße-Reibung entspricht, und um diesen zum Steuern von Gierstabilitätssteueroperationen des Fahrzeugs zu verwenden.

2. Gierstabilitätssteuersystem nach Anspruch 1, **dadurch gekennzeichnet, dass** es als das Mittel zum Bestimmen des Grads des Untersteuerns ferner ein Mittel zum Berechnen des Abfalls des Lenkraddrehmoments (8), nachdem das Untersteuern bestimmt worden ist, umfasst.

3. Gierstabilitätssteuersystem nach Anspruch 2, **dadurch gekennzeichnet, dass** das Mittel zum Bestimmen, ob der bestimmte Grad des Untersteuerns einen Schwellenwert übersteigt, ein Mittel umfasst, um zu bestimmen, ob der berechnete Abfall des Lenkraddrehmoments (8) einen Schwellenwert übersteigt.

4. Gierstabilitätssteuersystem nach einem der Ansprüche 2 bis 3, **dadurch gekennzeichnet, dass** das Mittel zum Berechnen des Abfalls des Lenkraddrehmoments (8) dafür ausgelegt ist, den Abfall des Lenkraddrehmoments (8) aus der Differenz zwischen dem Lenkraddrehmoment, wenn das Untersteuern detektiert wird, und dem aktuellen Lenkraddrehmoment zu berechnen.

5. Gierstabilitätssteuersystem nach Anspruch 1, **dadurch gekennzeichnet, dass** es als das Mittel zum Bestimmen des Grads des Untersteuerns ferner ein Mittel zum Berechnen des Gierratenfehlers, nachdem das Untersteuern bestimmt worden ist, umfasst.

6. Gierstabilitätssteuersystem nach Anspruch 5, **dadurch gekennzeichnet, dass** das Mittel zum Bestimmen, ob der vorgegebene Grad des Untersteuerns einen Schwellenwert übersteigt, ein Mittel zum Bestimmen, ob der Gierratenfehler einen Schwellenwert übersteigt, umfasst.

7. Gierstabilitätssteuersystem nach Anspruch 1, **dadurch gekennzeichnet, dass** es als das Mittel zum Bestimmen des Grads des Untersteuerns ferner ein Mittel zum Berechnen der Änderung der Zahnstangenkraft, nachdem das Untersteuern bestimmt worden ist, umfasst.

8. Gierstabilitätssteuersystem nach Anspruch 7, **dadurch gekennzeichnet, dass** das Mittel zum Bestimmen, ob der bestimmte Grad des Untersteuerns einen Schwellenwert übersteigt, ein Mittel zum Bestimmen, ob die Änderung der Zahnstangenkraft einen Schwellenwert übersteigt, umfasst.

9. Gierstabilitätssteuersystem nach einem der Ansprüche 1 bis 8, **dadurch gekennzeichnet, dass** die Lenkraddrehmomentdifferenz (3) eine lineare Funktion der Änderung des Lenkradwinkels seit Beginn (6) der Berechnung der Lenkraddrehmomentdifferenz ist.

10. Gierstabilitätssteuersystem nach einem der Ansprüche 1 bis 9, **dadurch gekennzeichnet, dass** die Lenkraddrehmomentdifferenz (3) als $\Delta Tq = sat((SWA_{actual} - SWA_{dTq\_start}) \cdot k, -T, T)$ berechnet wird, wobei T die Lenkraddrehmomentdifferenz gleichmäßig auf einen Maximalwert begrenzt.

11. Gierstabilitätssteuersystem nach einem der Ansprüche 1 bis 10, **dadurch gekennzeichnet, dass** die Lenkradwinkeldifferenz (9) unter der Annahme einer hohen Reifen-Straße-Reibung (1b) und keiner Lenkraddrehmomentdifferenz-Kompensation berechnet wird.

12. Gierstabilitätssteuersystem nach Anspruch 11, **dadurch gekennzeichnet, dass** die Lenkradwinkeldifferenz (9) ein Winkel ist, der unter Verwendung der Drehmomentdifferenz ($\Delta Tq$), der Drehmomentableitung nach der Querbeschleunigung ($dTq/da_y$), der Fahrgeschwindigkeit (v) und des quasistatischen Verhältnisses zwischen der Gierrate und dem Lenkradwinkel $\left( k_{\frac{d\dot{\psi}}{dSWA}} \right)$ aus einem linearen Fahrradmodell berechnet wird.

13. Gierstabilitätssteuersystem nach Anspruch 12, **dadurch gekennzeichnet, dass** die Lenkradwinkeldifferenz (9) berechnet wird aus:

$$\dot{\psi} \cdot v = a_y$$

$$\Rightarrow \Delta\dot{\psi} \cdot v = \Delta a_y$$

$$\Rightarrow (\Delta An \cdot k_{\frac{d\dot{\psi}}{dSWA}}) \cdot v = \frac{\Delta Tq}{dTq / da_y}.$$

14. Gierstabilitätssteuersystem nach einem der vorhergehenden Ansprüche, **dadurch gekennzeichnet, dass** als das Mittel zum Anwenden der berechneten Lenkraddrehmomentdifferenz (3) auf die Lenkung des Fahrzeugs ein elektrisches Servolenkungssystem verwendet ist.

15. Kraftfahrzeug, **dadurch gekennzeichnet, dass** es ein Gierstabilitätssteuersystem nach einem der vorhergehenden Ansprüche umfasst.

16. Verfahren zum Steuern eines Gierstabilitätssteuersystems für ein Fahrzeug, das mit einer elektrischen Servolenkung ausgestattet ist, wobei das Verfahren die folgenden Schritte umfasst:

Bestimmen des Auftretens eines Untersteuerns;
Bestimmen des Grads des Untersteuerns, nachdem das Auftreten eines Untersteuerns bestimmt worden ist;
Bestimmen, ob der bestimmte Grad des Untersteuerns einen Schwellenwert übersteigt;
**dadurch gekennzeichnet, dass** das Verfahren die folgenden Schritte umfasst:

Sichern des Lenkraddrehmomentwerts und des Lenkradwinkelwerts, wenn bestimmt wird, dass der bestimmte Grad des Untersteuerns den Schwellenwert übersteigt;
Berechnen einer Lenkraddrehmomentdifferenz und einer Lenkradwinkeldifferenz und Aktualisieren des Lenkradwinkels zu Beginn des Berechnens der Drehmomentdifferenz;
Anwenden der berechneten Lenkraddrehmomentdifferenz auf die Lenkung des Fahrzeugs;
Berechnen eines vom Fahrer beabsichtigten Lenkradwinkels als den Winkel, der dem aktuellen Lenkraddrehmoment für hohe Reifen-Straße-Reibung entspricht, und dessen Verwenden zum Steuern von Gierstabilitätssteueroperationen.

**Revendications**

1.  Système de commande de stabilité en lacet pour un véhicule pourvu d'une direction assistée électrique, comprenant : un moyen (10) pour déterminer l'apparition d'un sous-virage ; un moyen (20) pour déterminer le degré de sous-virage après que l'apparition d'un sous-virage a été déterminée ; un moyen pour déterminer si le degré de sous-virage déterminé dépasse une valeur de seuil ; **caractérisé en ce qu'**il comprend un moyen (30) pour mémoriser la valeur de couple de volant de direction et la valeur d'angle de volant de direction quand il est déterminé que le degré de sous-virage déterminé dépasse la valeur de seuil ; un moyen (40) pour calculer un delta de couple de volant de direction (3), un delta d'angle de volant de direction (9) et actualiser l'angle de volant de direction (6) au début du calcul de delta de couple ; un moyen (40) pour appliquer le delta de couple de volant de direction calculé (3) à la direction du véhicule ; un moyen (40) pour calculer un angle de volant de direction voulu par le conducteur (5) qui est l'angle qui correspond au couple courant du volant de direction pour un frottement « pneu sur route » élevé, et pour l'utiliser pour commander les opérations de commande de stabilité en lacet du véhicule.

2.  Système de commande de stabilité en lacet selon la revendication 1, **caractérisé en ce qu'**il comprend en outre comme moyen pour déterminer le degré de sous-virage un moyen pour calculer la chute du couple de volant de direction (8) après que le sous-virage a été déterminé.

3.  Système de commande de stabilité en lacet selon la revendication 2, **caractérisé en ce que** le moyen pour déterminer si le degré de sous-virage déterminé dépasse une valeur de seuil comprend un moyen pour déterminer si la chute du couple de volant de direction (8) calculée dépasse une valeur de seuil.

4.  Système de commande de stabilité en lacet selon l'une quelconque des revendications 2 à 3, **caractérisé en ce que** le moyen pour calculer la chute du couple de volant de direction (8) est agencé pour calculer la chute du couple de volant de direction (8) à partir de la différence entre le couple de volant de direction quand un sous-virage a été détecté et le couple de volant de direction courant.

5.  Système de commande de stabilité en lacet selon la revendication 1, **caractérisé en ce qu'**il comprend en outre comme moyen pour déterminer le degré de sous-virage un moyen pour calculer l'erreur d'amplitude du mouvement de lacet après que le sous-virage a été déterminé.

6.  Système de commande de stabilité en lacet selon la revendication 5, **caractérisé en ce que** le moyen pour déterminer si le degré de sous-virage déterminé dépasse une valeur de seuil comprend un moyen pour déterminer si l'erreur d'amplitude du mouvement de lacet dépasse une valeur de seuil.

7.  Système de commande de stabilité en lacet selon la revendication 1, **caractérisé en ce qu'**il comprend en outre comme moyen pour déterminer le degré de sous-virage un moyen pour calculer la variation de force de crémaillère de direction après que le sous-virage a été déterminé.

8.  Système de commande de stabilité en lacet selon la revendication 7, **caractérisé en ce que** le moyen pour déterminer si le degré de sous-virage déterminé dépasse une valeur de seuil comprend un moyen pour déterminer si la variation de force de crémaillère de direction dépasse une valeur de seuil.

9.  Système de commande de stabilité en lacet selon l'une quelconque des revendications 1 à 8, **caractérisé en ce que** le delta de couple de volant de direction (3) est une fonction linéaire de la variation de l'angle de volant de direction à partir du début (6) du calcul de delta de couple de volant de direction.

10. Système de commande de stabilité en lacet selon l'une quelconque des revendications 1 à 9, **caractérisé en ce que** le delta de couple de volant de direction (3) est calculé sous la forme $\Delta Tq = sat((SWA_{actual} - SWA_{dTq\_start})*k, -T,T)$, où $T$ limite de façon douce le delta de couple de volant de direction à une valeur maximale.

11. Système de commande de stabilité en lacet selon l'une quelconque des revendications 1 à 10, **caractérisé en ce que** le delta d'angle de volant de direction (9) est calculé en prenant l'hypothèse d'un frottement « pneu sur route » élevé et de l'absence de compensation de delta de couple de volant de direction.

**12.** Système de commande de stabilité en lacet selon la revendication 11, **caractérisé en ce que** le delta d'angle de volant de direction (9) est calculé à partir d'un modèle bicycle linéaire utilisant le delta de couple ($\Delta Tq$), la dérivée du couple par rapport à l'accélération latérale ($dTq/da_y$), la vitesse du véhicule ($v$) et le rapport quasi statique entre l'amplitude du mouvement de lacet et l'angle de volant de direction $\left( k_{\frac{d\dot\psi}{dSWA}} \right)$.

**13.** Système de commande de stabilité en lacet selon la revendication 12, **caractérisé en ce que** le delta d'angle de volant de direction (9) est calculé à partir des égalités suivantes :

$$\dot\psi * v = a_y$$
$$\Rightarrow \Delta\dot\psi * v = \Delta a_y$$
$$\Rightarrow (\Delta An * k_{\frac{d\dot\psi}{dSWA}}) * v = \frac{\Delta Tq}{dTq / da_y}$$

**14.** Système de commande de stabilité en lacet selon l'une quelconque des revendications précédentes, **caractérisé en ce qu'**un système de direction assistée électrique est utilisé comme moyen pour appliquer le delta de couple de volant de direction calculé (3) à la direction du véhicule.

**15.** Véhicule automobile **caractérisé en ce qu'**il comprend un système de commande de stabilité en lacet selon l'une quelconque des revendications précédentes.

**16.** Procédé de commande d'un système de commande de stabilité en lacet pour un véhicule pourvu d'une direction assistée électrique, comprenant les étapes suivantes :

déterminer l'apparition d'un sous-virage ;
déterminer le degré de sous-virage après que l'apparition d'un sous-virage a été déterminée ;
déterminer si le degré de sous-virage déterminé dépasse une valeur de seuil ;
**caractérisé en ce qu'**il comprend les étapes suivantes :

mémoriser la valeur de couple de volant de direction et la valeur d'angle de volant de direction quand il est déterminé que le degré de sous-virage déterminé dépasse la valeur de seuil ;
calculer un delta de couple de volant de direction et un delta d'angle de volant de direction et actualiser l'angle de volant de direction au début du calcul de delta de couple ;
appliquer le delta de couple de volant de direction calculé à la direction du véhicule ;
calculer un angle de volant de direction voulu par le conducteur qui est l'angle qui correspond au couple courant du volant de direction pour un frottement « pneu sur route » élevé, et l'utiliser pour commander les opérations de commande de stabilité en lacet du véhicule.

Fig. 1

Fig. 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007125083 A